Europäisches Patentamt

(19) European Patent Office

Office européen des brevets

(11) Publication number: **0 105 926**
**B1**

# EUROPEAN PATENT SPECIFICATION

(45) Date of publication of patent specification: **06.05.87**

(21) Application number: **83901859.5**

(22) Date of filing: **22.04.83**

(86) International application number:
**PCT/US83/00593**

(87) International publication number:
**WO 83/03777 10.11.83 Gazette 83/26**

(51) Int. Cl.⁴: **B 01 D 53/00**, C 03 B 19/00,
F 23 D 11/12

(54) VAPOR-PHASE AXIAL DEPOSITION SYSTEM.

(30) Priority: **26.04.82 US 371628**
**26.04.82 US 371629**
**26.04.82 US 371630**

(43) Date of publication of application:
**25.04.84 Bulletin 84/17**

(45) Publication of the grant of the patent:
**06.05.87 Bulletin 87/19**

(84) Designated Contracting States:
**BE CH DE FR LI NL SE**

(56) References cited:
**FR-A-2 496 088**
**GB-A- 163 782**
**GB-A-2 059 944**
**US-A- 932 739**
**US-A-1 313 605**
**US-A-1 385 884**
**US-A-1 820 530**
**US-A-1 820 530**
**US-A-2 104 958**
**US-A-2 944 386**
**US-A-3 073 534**

(73) Proprietor: **Western Electric Company,
Incorporated
222 Broadway
New York, NY 10038 (US)**

(72) Inventor: **ANDREJCO, Matthew Julius
R.D. No.2, 203 Hanover Drive
Wrightstown, NJ 08562 (US)**
Inventor: **POTKAY, Eugene
1015 Hughes Drive Apt. 17
Hamilton Square, NJ 08690 (US)**

(74) Representative: **Johnston, Kenneth Graham
et al
Western Electric Company Limited 5
Mornington Road
Woodford Green Essex, IG8 OTU (GB)**

Courier Press, Leamington Spa, England.

(58) References cited:
US-A-3 642 521
US-A-3 644 607
US-A-3 668 835
US-A-3 698 936
US-A-3 966 446
US-A-4 062 665
US-A-4 135 901
US-A-4 162 908
US-A-4 224 046
US-A-4 242 118
US-A-4 261 720
US-A-4 345 928
US-A-4 367 085

## Description

Technical Field

This invention relates to the fabrication of a lightguide preform using vapor-phase axial deposition techniques.

Background of the Invention

Lightguide fiber is drawn from a solid glass cylinder or preform. One particular technique for fabricating such a preform is described in U.S. Patent 4,062,665 to Izawa et al., which issued December 13, 1977, and is commonly referred to as the vapor-phase axial deposition (VAD) method.

The VAD technique uses a refractory starting member projecting axially into the central portion of an elongated cylindrical chamber. The member rotates along its axis of rotation, which is coincident with the chamber axis, as it is withdrawn therefrom. A glass raw material is introduced into a high temperature portion of a flame near the tip of a stationary torch producing a glassy particulate or soot which is directed onto the end of the rotating refractory starting member. A substantially cylindrical boule of porous soot is formed on the starting member as it is continuously withdrawn from the chamber at a rate equal to the growth rate of the soot upon the boule. The withdrawn soot boule is then subjected to an elevated temperature to consolidate the porous material into a solid, clear cylindrical lightguide preform. Such a technique has been found capable of fabricating lightguide preforms from which low loss lightguide fiber has been drawn. However, several problems are present with presently known systems to perform this process.

It has been observed, for example, that the torch flame in the prior known systems tends to wander and flicker. This results in an inefficient and non-uniform deposition of the soot, loss of reactant materials, and a lack of repeatability between runs.

Also, for various processing reasons, it is often desirable to change the physical characteristics of the torch used in the process. In the past, this has been a relatively time consuming and expensive process. GB—A—2,059,944A discloses a method of improving the uniformity of the diameter of a lightguide boule by controlling the spacing between an exhaust tube and the boule in a VAD system.

According to one aspect of the present invention there is provided a vapor-phase axial deposition system for fabricating a lightguide soot boule, said system comprising a deposition chamber; means for rotating about its axis a seed rod and for moving the rod along its axis within the chamber; a torch serving to project soot toward the rod to form the soot boule, the axis of the torch and the rod being in a first plane; and an exhaust tube extending into the deposition chamber with a port thereof adjacent to the boule, characterised in that the deposition chamber comprises first and second planar parallel surfaces mounted on opposite sides of the first plane, and in that the distance between the said surfaces is less than the dimension of the chamber in the first plane, whereby flame flicker and wander are substantially eliminated during boule formation.

According to another aspect of the present invention there is provided a method of fabricating a substantially cylindrical lightguide soot boule in a vapor-phase axial deposition system, said method comprising rotatably mounting within a deposition chamber a seed rod and axially withdrawing the rod during formation of the boule, projecting a soot stream from a torch toward the boule, and exhausting vapor from within the chamber by an exhaust tube extending into the chamber and with a port adjacent to the boule, the rotational axis of the boule and the soot stream being in a first plane, characterised in that the first plane is confined between first and second planar parallel surfaces; the distance between the said surfaces being less than the dimension of the chamber in the first plane, whereby flame flicker and wander are substantially eliminated.

We have discovered that flickering of the torch flame can be reduced by each of several techniques. One technique is the use of a deposition chamber so shaped to avoid the presence of dead spaces which would otherwise give rise to non-constant gas movement within the chamber and cause flame flicker. Another technique is the use of a more efficient exhaust system which prevents: a) the presence of clouds of excess soot which move about the chamber in uncontrolled fashion, and b) variations in the chamber gas pressure (which cause flame flicker) caused by fluctuations in the exhaust system. This other technique is the subject of copending E.P. Application 85 201 655.9 (EP—A—0178032) filed on even date herewith. A novel torch is provided allowing a rapid and simple changes in the torch configuration and characteristics.

Brief Description of the Drawing

FIG. 1 is an isometric view of the inventive VAD chamber;

FIG. 2 is an isometric view of a soot torch used in the VAD chamber;

FIGS. 3, 4 and 5 are isometric views of the innermost, intermediate and outer tubes of the torch;

FIG. 6 is a cross-sectional view of the soot torch;

FIGS. 7, 8 and 9 are exemplary end configurations of the soot torch;

FIG. 10 is a schematic view of the VAD system;

FIG. 11 is a side view of an exhaust tube; and

FIG. 12 is a cross-sectional view of a soot collection chamber used in the exhaust system.

Detailed Description

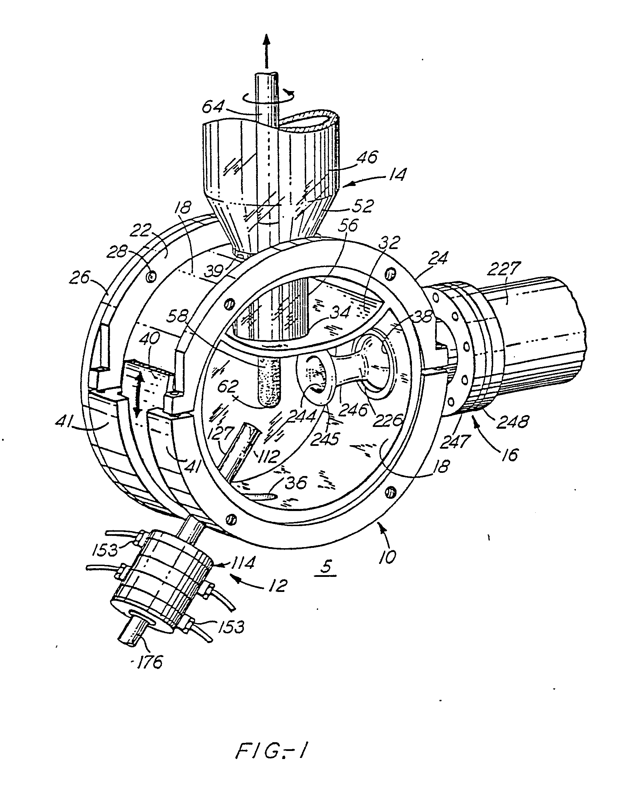

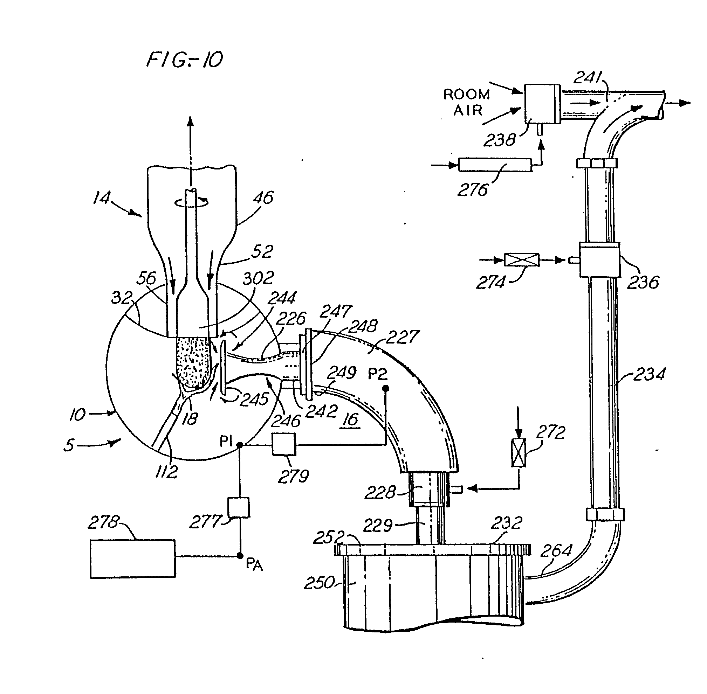

FIG. 1 is an isometric view of the instant VAD system, generally referred to by the numeral 5, comprised of a housing 10, a torch 12, and input section 14 and an exhaust system 16 (also see FIG. 10).

The housing 10 has a short cylindrical body 18 with front and rear flanges 22 and 24, respectively. The diameter of the cylindrical body 18 is greater than the length thereof. A substantially planar, circular, coverplate 26 is removably fastened to the rear flange 24 by bolts 28—28. A similar coverplate (not shown) is also fastened to the front flange 24 during operation. An arcuate shaped baffle 32 having an opening 34 therein is mounted within the housing 10. The body 18 has an elongated slot 36 and first and second ports 38 and 39, respectively, therethrough. An arcuate plate 40 is slidably positioned between opposed guide members 41—41 and the cylindrical body 18.

The input section 14 is comprised of a hollow, cylindrical member 46, a tapered section 52 and a hollow, small diameter section 56 which passes through the port 39, and terminates at the opening 34 in the baffle 32. A starting member 58 or seed rod which may be a hollow glass tube having a rounded end portion 62 (e.g., a test tube) is removably connected to a rotatable rod 64 which can move towards or away from the center of the housing 10.

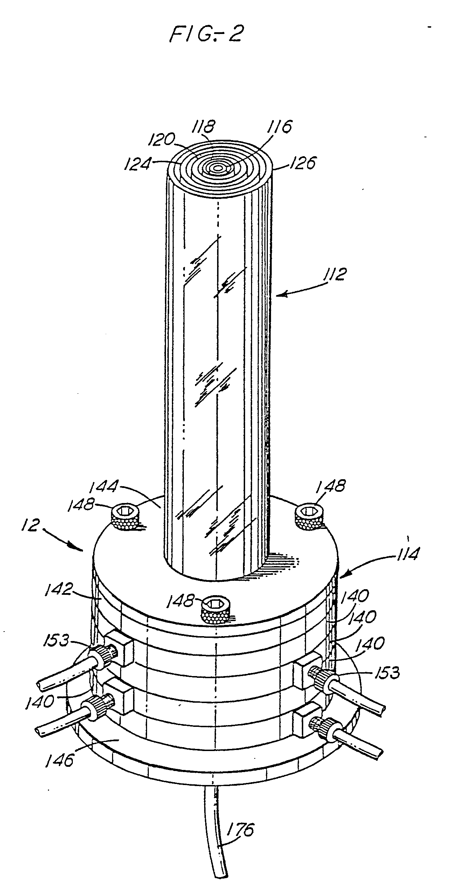

The torch 12 is comprised of a nozzle 112 and a base 114. The nozzle 112 is comprised (FIG. 2) of an inner glass tube 116, a plurality of intermediate glass tubes 118, 120 and 124 and an outer glass tube 126 all of which are concentrically mounted one inside the other. Additionally, a large diameter cylinder or shroud 127 (FIG. 1) is slidably mounted on the outer glass tube 126 and extends beyond the end of the. nozzle 112. The axial position of the shroud 127 is adjustable to alter the focusing of the flame emanating from the nozzle 112 during the soot deposition process.

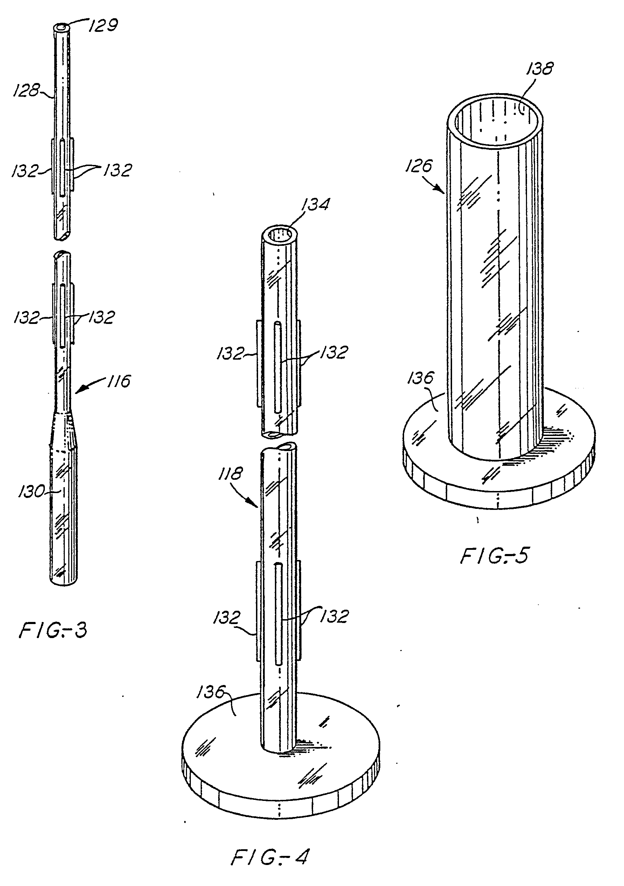

The inner tube 116, as can be seen in FIG. 3, is comprised of a first elongated, small diameter, section 128 having a bore 129 and a large diameter section 130. A plurality of splines 132—132 are fixedly mounted and equally spaced about the periphery of the section 128. The splines can comprise glass rods bonded to the tubing section 128.

Each of the intermediate tubes 118, 120 and 124 is substantially the same, but of different diameters. Accordingly, only the tube 118 (see FIG. 4) is described in detail. The tube 118 has a substantially uniform diameter bore 134, a plurality of fixedly mounted, equally spaced splines 132—132 on the periphery thereof and a radially extending flange 136 on one end thereof.

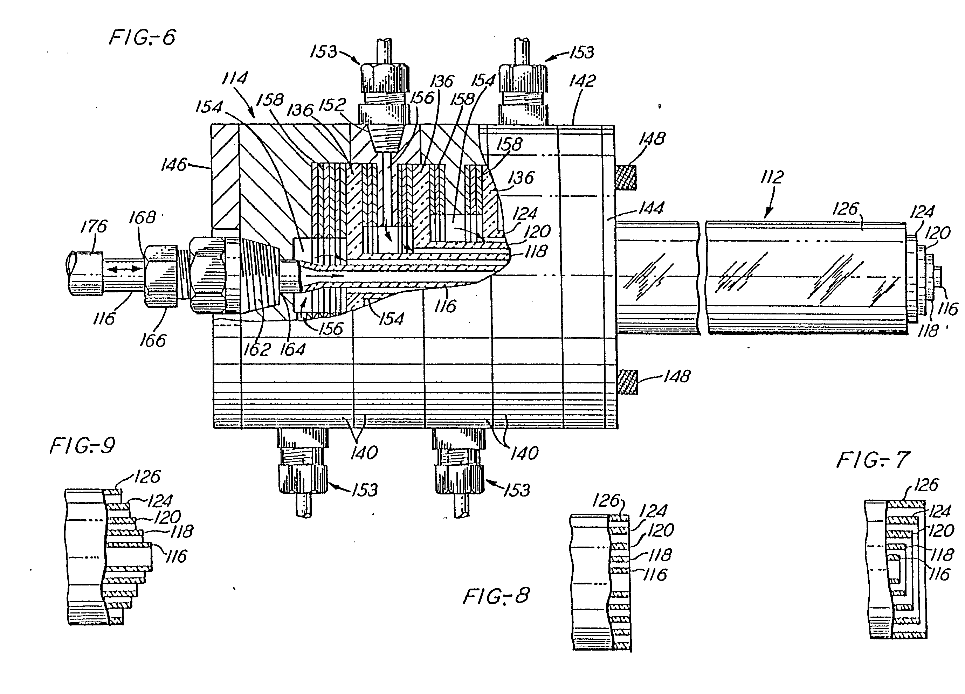

The outer tube 126 (see FIG. 5) is similar to the intermediate tubes 118, 120 and 124, having a large diameter bore 138, but not having any splines on the outer surface thereof. A flange 136 radially extends from one end thereof.

The concentrically mounted tubes 116, 118, 120, 124 and 126 extend into, and are held in place by, the base 114 as can be seen in the cross-sectional view of FIG. 6. The base 114 is comprised of a plurality of annular support members 140—140 and an annular top member 142. The support members 140—140 and the top member 142, which may be a Teflon polymer material or the like, are held between a top plate 144 and a bottom plate 146 by a plurality of threaded rods 148—148 which pass therethrough and are screwed into the bottom plate 146. Each of the members 140—140 has an opening 152 into the wall thereof to threadably receive a gas line connector 153. Each of the openings 152—152 communicates with a respective one of a plurality of inner annular chambers 154—154 via a respective one of a plurality of channels 156—156. A plurality of washer shaped spacers 158—158 are located between respective flanges 136—136 of the intermediate tubes 118, 120 and 124 and the outer tube 126. A ferrule 162 having an axial passageway 164 therethrough is threadably inserted into the lowermost support member 140 while a locking nut 166 having an opening 168 therein is threadably positioned thereon.

As shown, the intermediate tubes 118, 120 and 124 are inside, and concentric with, the outer tube 126. The splines 132—132 have an accurately machined thickness which maintains a predetermined, spaced relation between said tubes. The flanges 136—136 are positioned between the ring support members 140—140. Additionally, the angular shaped spacers 158—158 are located between each flange 136. Advantageously, the number of spacers 158—158 between each flange 136 may be readily changed in order to alter the height of one or more of the tubes relative to the other tubes. Thus, the end configuration of the nozzle 112 may be readily rearranged resulting in various configurations, three of which are shown in FIGS. 7, 8 and 9.

In addition to the ability to alter the configuration of the exhaust end of the nozzle 112, the positioning of the inner tube 116 can be adjusted by moving it forwardly or back through the ferrule 162 and then locking it in place by means of the lock nut 166.

The exhaust system 16 is shown in FIG. 10 and is comprised of the serial combination of an exhaust tube 226, an outlet pipe 227, a first injection venturi 228, a soot collection chamber 232 and a discharge line 234 with a second injection venturi 236 therein. A third injection venturi 238 is connected to an air intake line 241 which joins the discharge line 234 for connection to an exhaust hood (not shown).

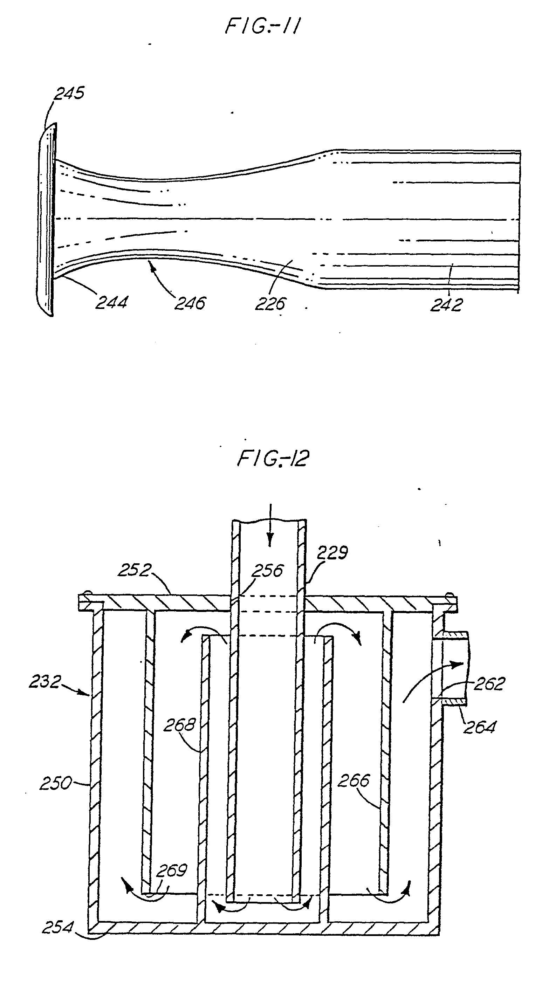

The exhaust tube 226 (see FIG. 11) has a substantially hollow cylindrical output end 242 and a flared intake 244 having a gradually turned back lip 245. The tube 226 has a constricted throat section 246 intermediate the output end 242 and the intake 244.

The output end 242 of the exhaust tube 226 is fixedly positioned in a mounting plate 247 (FIG. 10). The mounting plate 247 is sealably fastened to a flange 248 on a first end 249 of the outlet pipe 227.

The soot collection chamber 32, shown in cross section in FIG. 12, is comprised of a cylindrical housing 250 having top and bottom plates 252 and 254, respectively. The top plate 252 has an opening 256 through which a connecting pipe 229 from the venturi 28 passes and projects into the central portion of the chamber 32. The housing 250 also has an opening 262 therein to receive a first end 264 of the discharge line 234. First and second concentric cylinders 266 and 268 are mounted within the housing 250. The first cylinder 266 is fixedly attached to, and depends from, the top plate 252 and has an unattached end 269 in spaced relation with the bottom plate 254. The second cylinder 268 is fixedly mounted on the bottom plate 254, within the first cylinder 266, and projects upward, towards and in spaced relation to, the top plate 252.

The injection ventures 228, 236 and 238 are of the known in-line, injection type manufactured, for example, by the Nortel Machine Company, Buffalo, New York, USA (model AM—1500, glass filled Teflon polymer). Filtered compressed air is supplied to each injection venturi 228, 236 and 238 by controlled flow air pumps 272, 274 and 276, respectively. As generally known, such injection ventures operate to control the rate of gas flow therethrough in response to the supplied rate of compressed air, and are useful to control the pressure profile along gas flow lines.

In the present arrangement, the operation of the injection venturi 236 influences the pressure measured at $P_1$, in the housing 10, while the injection venturi 228 influences the differential pressure between the housing at $P_1$ and the outlet pipe 227 at $P_2$. Based upon the measurement of the differential pressure, the air pump 274 is adjusted until the desired pressure (e.g., standard atmosphere 1.33 mbar; 760 mm Hg) in the housing 10 is achieved. A pressure measuring apparatus 277 references ambient room pressure $P_A$ which is monitored by a barometer 278. The differential pressure $(P_1 - P_2)$, monitored by a pressure guage 279 is nominally selected to a predetermined pressure by adjusting the air pump 272 which controls the flow of gas through the injection venturi 228. The injection venturi 238 is also useful to control the overall pressures in the exhaust line 234.

The meters 277 and 279 and the barometer 278 can be of known type and can provide outputs connected to a computer control (not shown) which provides a feedback signal to the air pumps 272, 274 and 276 to control the flow of air to the ventures 228, 236 and 238 to continuously control the pressure within the system 16 and the housing 10.

In operation (see FIGS. 1 and 10), the arcuate plate 40 is moved within the guide members 41—41 to position the axis of the nozzle 112 of the torch 12 at a predetermined angle (e.g., 35°) to the axis of the starting member 58 with the nozzle directed at the end portion 62 thereof.

Gaseous reactants such as $SiCl_4$; $GeCl_4$; $POCl_3$ or the like, in an argon carrier gas, flow from a source, not shown, into a flexible tube 176 and through the inner tube 116 as shown in FIG. 6. Other gases are caused to flow through the channels 156—156 into their respective chambers 154—154 and out the discharge end of the nozzle 112. Gases such as $SiCl_4$ flow between the tubes 116 and 118, hydrogen flows between the tubes 118 and 120, argon flows between tubes 120 and 124 while oxygen flows between tubes 124 and 126.

The selection of the various gases, the flow rates thereof, and the like, to produce the soot boule 62 is in accordance with prior known technology.

The nozzle produces a soot which is deposited to form a rotating boule 302 as shown in FIG. 10. The soot boule 302 is simultaneously rotated and withdrawn from the VAD system 5 through the input section 14. Inert gas is directed into the chamber 5 between the surfaces of the growing porous boule 302 and the inner surface of the small diameter section 56 of the input section 14 as indicated by the arrows. The intake 244 of the exhaust tube 226 is located proximate the rotating soot boule 302. The undeposited soot and gases are drawn into and through the exhaust tube 226.

It has been found that the flared intake 244 with the gradually turned back lip 245 is effective in removing undeposited soot from behind the flared intake as indicated by the arrows. Additionally, the gradually turned back lip 245 substantially eliminates turbulence of gases at the intake 245 which further enhances soot deposition on the boule 302.

The constricted section 246 of the exhaust tube 226 accelerates the flow of the combustion byproducts and undeposited soot extracted from the deposition chamber 5 and as a consequence, produces a forward pressure drop, e.g., 1.60 mbar (1.2 mm Hg), between the chamber and the outlet pipe 227.

The exhausted gases and undeposited soot pass from the exhaust tube 226, through the outlet pipe 227 and the injection venturi 228 into the soot collection chamber 232. The chamber 232 performs the dual function of extracting soot from the exhaust stream while providing some degree of isolation between the housing 10 and downstream pressure fluctuations. The soot collection chamber 232 (see FIG. 12) provides a serpentine path for the soot and exhaust gases directed therein. The exhaust gases and soot are directed axially into the chamber 232 through the pipe 229. The exhaust gases exiting the inlet pipe 229 expand radially outward and move upward, toward the top plate 252 where the gas again expands. This process is repeated until the gases are finally exhausted through the opening 262 and pass into the discharge line 234. The heavier soot particles deposit on the bottom plate 254 while lighter particulate deposit on the surfaces of the cylinders 266 and 268 as well as the inside wall of the housing 250.

The gases, with any soot residue therein are moved through the discharge line 234 (see FIG. 10), under the control of the injection ventures

236 and 238, and exit into an exhaust hood (not shown).

It has been found that the configuration of the housing 10 substantially eliminates large secondary gas circulation cells (i.e., chamber spaces providing unequal heating and cooling of the various gases thereby giving rise to non-uniform or non-constant gas flow patterns). Such elimination of secondary gas circulation cells appears to be due to the confinement by the limited depth of the housing 10. The ratio of the diameter of the housing 10 to the housing depth should be greater than 1.5:1 while the ratio of the housing depth to the diameter of the soot boule 302 is less than 3:1. In one embodiment, the diameter of the housing 10 is 25 cm, the depth is 12 cm, and the boule diameter is 5 cm.

Additionally, as shown in FIG. 1, the elongated axes of the nozzle 112, the boule 62, and the exhaust tube 226 are disposed in a common plane. This further reduces secondary gas circulation.

The foregoing deposition chamber arrangement and exhaust system, it is found, results in a gas flow pattern that substantially eliminates flame flicker and wander resulting in a soot deposition process in which the deposition rate, the density of the soot boule, the boule growth rate and the shape of the deposition surface are reproducible to a degree not heretofore attainable.

The housing 10, the baffle 32, the end plates 26—26, the input section 14 and the exhaust tube 226 are fabricated from Pyrex (Trade mark) glass. However, various other glasses or metallic materials may be used.

**Claims**

1. A vapor-phase axial deposition system for fabricating a lightguide soot boule (302), said system comprising a deposition chamber (10); means for rotating about its axis a seed rod (58) and for moving the rod along its axis within the chamber; a torch (12) serving to project soot toward the rod to form the soot boule, the axes of the torch and the rod being in a first plane; and an exhaust tube (226) extending into the deposition chamber with a port (244) thereof adjacent to the boule, characterised in that the deposition chamber comprises first and second planar parallel surfaces (26) mounted on opposite sides of the first plane, and in that the distance between the said surfaces is less than the dimension of the chamber in the first plane, whereby flame flicker and wander are substantially eliminated during boule formation.

2. A system according to claim 1, characterised in that the deposition chamber is a cylindrical housing (18) and the first and second surfaces are end plates of the housing, in that the distance between the said surfaces is less than the diameter of the housing; and in that the seed rod, the torch and the exhaust tube extend through the cylindrical housing and are in the first plane which is normal to the axis of the housing.

3. A system according to claim 3, characterised in that the housing diameter to depth ratio is greater than 1.5:1.

4. A system according to any one preceding claim, characterised in that the torch is comprised of a plurality of concentrically aligned tubes with a concentrically aligned inner tube (116) that is movable in an axial direction during the deposition process.

5. A system according to claim 2 or 3, characterised in that the exhaust end of the exhaust tube is connected to an outlet pipe (227); in that the intake end of the exhaust tube is flared, and in that the tube has a constricted portion (246) intermediate said ends.

6. A system according to any one preceding claim characterised in that at least one baffle (32) is positioned within said housing to control the flow of gases therein.

7. A method of fabricating a substantially cylindrical lightguide soot boule (302) in a vapor-phase axial deposition system, said method comprising rotatably mounting within a deposition chamber (10) a seed rod (58) and axially withdrawing the rod during formation of the boule, projecting a soot stream from a torch (12) toward the boule, and exhausting vapor from within the chamber by an exhaust tube (226) extending into the chamber and with a port adjacent to the boule, the rotational axis of the boule and the soot stream being in a first plane, characterised in that the first plane is confined between first and second planar parallel surfaces (26), the distance between the said surfaces being less than the dimension of the chamber in the first plane, whereby flame flicker and wander are substantially eliminated.

8. A method according to claim 7, characterised in that the distance between said first and second surfaces is maintained at less than three times the diameter of the soot boule to be fabricated.

**Patentansprüche**

1. System für axiales Niederschlagen aus der Dampfphase zur Herstellung eines Lichtleiter-Soot-Körpers (302), mit

— einer Niederschlagskammer (10),

— einer Einrichtung zum Drehen eines Keim-Stabes (58) um dessen Achse und zum Bewegen des Stabes längs dessen Achse innerhalb der Kammer,

— einem Brenner (11), der zum Richten von Soot auf den Stab hin zur Bilding des Soot-Körpers dient, wobei die Achsen des Brenners und des Stabes in einer ersten Ebene liegen, und

— einem Auslaßrohr (226), das sich in die Niederschlagskammer mit einem Teil (244) benachbart zu dem Soot-Körper erstreckt, dadurch gekennzeichnet, daß

— die Niederschlagskammer erste und zweite planparallele Flächen (26) umfaßt, die auf gegenüberliegenden Seiten der ersten Ebene befestigt sind, und

— der Abstand zwischen den Flächen kleiner als die Abmessung der Kammer in der ersten Ebene ist, wodurch während der Soot-Körper-Bildung Flammen-Flackern und -Wandern im wesentlichen eliminiert sind.

2. System nach Anspruch 1, dadurch gekennzeichnet, daß

— die Niederschlagskammer ein zylindrisches Gehäuse (18) ist, wobei die erste und zweite Fläche Stirnplatten des Gehäuses sind,

— der Abstand zwischen den Flächen kleiner ist als der Durchmesser des Gehäuses und

— der Keimstab, der Brenner und das Auslaßrohr sich durch das zylindrische Gehäuse erstrecken und in der ersten Ebene liegen, welche senkrecht zur Gehäuseachse ist.

3. System nach Anspruch 2, dadurch gekennzeichnet, daß

— das Verhältnis von Durchmesser zur Tiefe des Gehäuses größer als 1,5:1 ist.

4. System nach einem der vorstehenden Ansprüche, dadurch gekennzeichnet, daß

— der Brenner aufgebaut ist aus einer Vielzahl konzentrisch ausgerichteter Rohre, wobei ein konzentrisch ausgerichtetes inneres Rohr (116) während des Niederschlagsprozesses in axialer Richtung bewegbar ist.

5. System nach Anspruch 2 oder 3, dadurch gekennzeichnet, daß

— das auslaßseitige Ende des Auslaßrohrs mit einer Auslaßleitung (227) verbunden ist,

— das Einlaßende des Auslaßrohrs erweitert ist und

— das Rohr einen eingeschnürten Teil (246) zwischen den Enden besitzt.

6. System nach einem der vorstehenden Ansprüche, dadurch gekennzeichnet, daß

— wenigstens eine Prallfläche (32) innerhalb des Gehäuses angeordnet ist, um die Gasströmung hierin zu steuern.

7. Verfahren zum Herstellen eines im wesentlichen zylindrischen Lichtleiter-Soot-Körpers (302) in einem System für axiales Niederschlagen aus der Dampfphase, umfassend

— drehbares Montieren eines Keimstabes (58) innerhalb einer Niederschlagskammer (10) und axiales Rückziehen des Stabes während der Bildung des Soot-Körpers,

— Richten einer Soot-Strömung von einem Brenner (12) auf den Soot-Körper hin und

— Entfernen (Absaugen) von Dampf aus der Kammer durch ein sich in die Kammer mit einem Teil benachbart zu dem Soot-Körper erstreckenden Auslaß-Rohr (26), wobei die Drehachse des Soot-Körpers und die Soot-Strömung in einer ersten Ebene liegen,

daduch gekennzeichnet, daß

— die erste Ebene eingegrenzt ist zwischen ersten und zweiten planparallelen Flächen (26), deren Abstand kleiner ist als die Abmessung der Kammer in der ersten Ebene, wodurch Flammen-Flackern und -Wandern im wesentlichen eliminiert sind.

8. Verfahren nach Anspruch 7, dadurch gekennzeichnet, daß

— der Abstand zwischen der ersten und zweiten Oberfläche auf weniger als das dreifache des Durchmessers des herzustellenden Soot-Körpers gehalten wird.

**Revendications**

1. Un système de dépôt axial en phase vapeur pour fabriquer un barreau de suie pour un guide de lumière (302), ce système comprenant une chambre de dépôt (10); des moyens destinés à faire tourner autour de son axe une tige-germe (58) et à déplacer la tige le long de son axe à intérieur de la chambre; un chalumeau (12) destiné à projeter de la suie vers la tige pour former le barreau de suie, les axes du chalumeau et de la tige se trouvant dans un premier plan; et un tube d'évacuation (226) qui pénètre dans la chambre de dépôt, avec un orifice (224) de ce tube adjacent au barreau, caractérisé en ce que la chambre de dépôt comprend des première et seconde surfaces planes parallèles (26) disposées de part et d'autre du premier plan, et en ce que la distance entre ces surfaces est inférieure à la dimension de la chambre dans le premier plan, ce qui a pour effet d'éliminer pratiquement le vacillement et le déplacement erratique de la flamme pendant la formation du barreau.

2. Un système selon la revendication 1, caractérisé en ce que la chambre de dépôt est une enceinte cylindrique (18) et les première et seconde surfaces sont des plaques d'extrémité de l'enceinte, en ce que la distance entre ces surfaces est inférieure au diamètre de l'enceinte; et en ce que la tige-germe, le chalumeau et le tube d'evacuation traversent l'enceinte cylindrique et sont contenus dans le premier plan, qui est normal à l'axe de l'enceinte.

3. Un système selon la revendication 2, caractérisé en ce que le rapport entre le diamètre et la profondeur de l'enceinte est supérieur à 1,5:1.

4. Un système selon l'une quelconque des revendications précédentes, caractérisé en ce que le chalumeau est constitué par un ensemble de tubes alignés de façon concentrique, avec un tube intérieur aligné de façon concentrique (116) qui peut être déplacé en direction axiale pendant le processus de dépôt.

5. Un système selon la revendication 2 ou 3, caractérisé en ce que l'extrémité d'évacuation du tube d'évacuation est raccordée à un tuyau de sortie (227); en ce que l'extrémité d'entrée du tube d'évacuation est évasée; et en ce que le tube comporte une partie resserrée (246) entre les extrémités précitées.

6. Un système selon l'une quelconque des revendications précédentes, caractérisé en ce qu'au moins un déflecteur (32) est placé à l'intérieur de l'enceinte pour définir la circulation des gaz dans cette dernière.

7. Un procédé de fabrication d'un barreau de suie pour guide de lumière (302), pratiquement cylindrique, dans un système de dépôt axial en phase vapeur, ce procédé comprenant les opérations qui consistent à monter de façon tournante une tige-germe (58) à l'intérieur d'une chambre de dépôt (10) et à extraire axialement la tige pendant la formation du barreau, à projeter un jet de suie vers le barreau, à partir d'un chalumeau (12), et à évacuer la vapeur se trouvant à l'intérieur de la chambre, au moyen d'un tube d'évacuation (226) qui pénètre dans la chambre et qui comporte un orifice adjacent au barreau, l'axe de rotation du barreau et le jet de suie se trouvant dans un premier plan, caractérisé en ce que le premier plan est confiné entre des première et seconde surfaces planes et parallèles (26), la distance entre ces surfaces étant inférieure à la dimension de la chambre dans le premier plan, ce qui a pour effet d'éliminer pratiquement le vacillement et le déplacement erratique de la flamme.

8. Un procédé selon la revendication 7, caractérisé en ce qu'on maintient la distance entre les première et seconde surfaces à une valeur inférieure à trois fois le diamètre du barreau de suie à fabriquer.

FIG-1

FIG.-2

FIG-3

FIG-4

FIG-5

FIG.-6

FIG.-9

FIG.-8

FIG.-7

0 105 926

FIG.-10

## FIG.-11

## FIG.-12